Europäisches Patentamt

European Patent Office

Office européen des brevets

(11) Veröffentlichungsnummer: **0 236 704 B1**

## EUROPÄISCHE PATENTSCHRIFT

(45) Veröffentlichungstag der Patentschrift: **17.07.91**

(51) Int. Cl.⁵: **F24D 3/00**, F24F 12/00, F24F 5/00, F24D 11/02

(21) Anmeldenummer: **87100898.3**

(22) Anmeldetag: **23.01.87**

(54) Verfahren und Einrichtung zur Rückgewinnung von transmissionswärme.

(30) Priorität: **08.03.86 DE 3607719**

(43) Veröffentlichungstag der Anmeldung:
**16.09.87 Patentblatt 87/38**

(45) Bekanntmachung des Hinweises auf die Patenterteilung:
**17.07.91 Patentblatt 91/29**

(84) Benannte Vertragsstaaten:
**AT BE CH DE ES FR GB GR IT LI LU NL SE**

(56) Entgegenhaltungen:
**EP-A- 0 115 014**
**DE-A- 2 602 479**
**DE-A- 3 001 023**
**DE-A- 3 441 597**
**US-A- 3 929 186**

(73) Patentinhaber: **Schmitz, Johannes, Dr.-Ing.**
**Nordstrasse 2**
**W-5162 Niederzier(DE)**

(72) Erfinder: **Schmitz, Johannes, Dr.-Ing.**
**Nordstrasse 2**
**W-5162 Niederzier(DE)**

(74) Vertreter: **Liermann, Manfred**
**Schillingsstrasse 335**
**W-5160 Düren(DE)**

EP 0 236 704 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Bauwerk mit mindestens einem inneren Hohlraum und mindestens einem inneren Sammelschacht, der einerseits mit der Ansaugseite einer Wärmerückgewinnungsanlage und andererseits mit inneren Hohlräumen des Bauwerkes verbunden ist, wobei das Bauwerk in mindestens dem überwiegenden Teil seines Außenbereiches von einem ersten Hohlraum mit einer äußeren Begrenzungsfläche umgeben ist, der mit dem Sammelschacht verbunden ist und wobei das Bauwerk Wärmetauscher aufweist, die mit dem Wärmetauscher der Wärmerückgewinnungsanlage verbunden sind.

Im Berich der Minimierung des Energiebedarfs sind bereits geeignete Verfahren und entsprechend gestaltete Gebäude beispielsweise bekannt durch die europäische Veröffentlichung Nr. 0115014. Solche Verfahren und die entsprechende Gebäudegestaltung haben sich in der Praxis bereits als außerordentlich wirkungsvoll erwiesen. Es hat sich jedoch gezeigt, daß dennoch ein nicht unbeträchtlicher Wärmeverlust hingenommen werden muß. Es handelt sich hierbei im wesentlichen um Transmissionswärme, die von der Außenhaut des Gebäudes abgestrahlt wird und die Umgebungsluft erwärmt, wobei dann diese erwärmte Umgebungsluft in unmittelbarer Gebäudeumgebung von der Außenluftzirkulation in der Außenluft verteilt wird. Dieser Verlust ist um so größer, je größer die Temperaturdifferenz zwischen Außenlufttemperatur und Gebäudeinnentemperatur ist. Genau betrachtet ist zwar nur die Temperaturdifferenz zwischen der Temperatur der Luft,die das Gebäude in den Luftführungskanälen umströmt und der Außenluft maßgebend, jedoch kann aus verschiedenen Gründen die in den Luftführungskanälen zirkulierende Luft nicht mit sinnvollem Ergebnis bei tiefen Außentemperaturen entsprechend tief abgesenkt werden.

Der Erfindung liegt damit die Aufgabe zugrunde ein Bauwerk der eingangs beschriebenen Art vorzuschlagen, mit dem es gelingt, mindestens den wesentlichen Teil der nach Methoden des Standes der Technik noch verlorengehenden Transmissionswärme wieder zurückzugewinnen.

Diese Aufgabe ist bei einem Bauwerk der eingangs beschriebenen Art dadurch gelöst, daß die äußere Begrenzungsfläche mindestens überwiegend in dem Bereich, in dem das Bauwerk in die Außenluft hineinragt, von einem zweiten Hohlraum umgeben ist, das seinerseits über eine äußere Begrenzungsfläche zur Außenluft bildende Bauwerk gegen die Außenluft abgegrenzt ist, wobei der zweite Hohlraum mit dem ersten Hohlraum über definierte Undichtigkeiten verbunden ist, der erste Hohlraum und die inneren Hohlräume mit dem Sammelschacht verbunden sind und der zweite Hohlraum möglichst hoch gelegene Öffnungen aufweist. Durch die beschriebene Bauweise wird das Bauwerk in seinen wesentlichen Bereichen zweilagig von Hohlräumen umgeben, deren Luftmassen nicht umgepumpt sondern abgesaugt werden durch eine entsprechende Saugeinrichtung einer Wärmerückgewinnungsanlage. Der Aufbau eines solchen Bauwerks ist sehr einfach, und es werden besondere Anforderungen an die Hohlräume oder an die Hohlraumform nicht gestellt, da ja die Strömungsgeschwindigkeiten der abgesaugten Luft sehr gering sind.

Nach einer Ausgestaltung der Erfindung ist noch vorgesehen, daß die Wärmetauscher in Gips oder gipsartiger Substanz im Gebäude verlegte Kupferrohre aufweisen. Dies ist sehr einfach herstellbar und es findet ein leichter Wärmetransport statt. Wegen der nur sehr geringen Temperaturdifferenz zwischen der Oberfläche eines solchen Wärmetauschers im Bauwerk (z.B. der Oberfläche einer Fußbodenheizung) können die Kupferrohre in ihren Querschnittsabmessungen sehr klein gehalten werden und können z.B. mit einem lichten Durchmesser von 6 bis 8 mm verlegt werden. Rohre so kleinen Durchmessers erlauben außerdem besonders einfache und kleinzuhaltende Verteileinrichtungen für die verschiedenen Heiz- bzw. Kühlkreisläufe, so daß das ganze Bauwerk im Bauaufwand vereinfacht und damit verbilligt wird.

Es ist dann weiter nach der Erfindung vorgeschlagen, daß die Wärmerückgewinnungsanlage mindestens eine Wärmepumpe enthält. Eine solche Wärmepumpe kann in Relation zum Inhalt des zugehörigen Gebäudes klein gehalten werden, gemessen an der Auslegung der Wärmepumpen bei Gebäuden des Standes der Technik.

Nach ergänzender Ausgestaltung der Erfindung ist dann vorgesehen, daß die Wärmerückgewinnungsanlage mehrere Wärmepumpen enthält, die luftseitig hintereinander geschaltet und entsprechend dieser Schaltung in ihrer Leistung abgestuft sind. Hierdurch gelingt es, auch bei größeren Bauwecken relativ kleine und damit wirschaftlich arbeitende Wärmepumpen zu verwenden und je nach Betriebsbedingung durch die Zu- oder Abschaltung von Wärmepumpen unterschiedlicher Leistung die jeweils in Betrieb befindlichen Wärmepumpen in einem optimalen Leistungsbereich zu fahren.

Ergänzend ist nach der Erfindung vorgeschlagen, daß die die äußere Begrenzung des Bauwerkes bildenden Baukörper als Verkleidung auf die Bausubstanz des Bauwerkes aufgesetzt sind. Hierdurch gelingt es, das Bauwerk im wesentlichen in herkömmlicher Bauweise zu erstellen und die Maßnahmen nachträglich durchzuführen. Gleichzeitig wird hierdurch auch beispielsweise eine Altbausanierung möglich gemacht.

Nach weiterer Ergänzung der Erfindung ist dann noch vorgeschlagen, daß der erste und zweite Hohlraum mindestens teilweise als Mehrzahl von Hohlkanälen ausgebildet ist. Dies vereinfacht den Bauaufwand und verbessert die Stabilität einer solcherart aufgebauten Außenhaut.

Weiterhin ist nach der Erfindung vorgeschlagen, daß die die Hohlräume enthaltenden Baukörper als zusammensetzbare Bauelemente ausgebildet sind und in zusammengesetzter Form eine äußere Wärmedämmschale bilden. Hierdurch gelingt es, solche Baukörper vorzufertigen und als vorgefertigte Elemente bereitzuhalten. Gleichzeitig wird der Aufbau einer solchen äußeren dämmenden Schicht damit erleichtert.

Es ist weiter nach der Erfindung vorgeschlagen, daß der Sammelschacht zumindest teilweise von den im Bauwerk vorgesehenen Korridoren und damit verbundenen Treppenschächten gebildet wird. Hierdurch gelingt es weitgehend besondere bauliche Maßnahmen zur Herstellung eines Sammelschachtes zu vermeiden. Außerdem können vorhandene Kamine zum Ansaugen und Vorwärmen von Außenluft genutzt werden.

Es ist auch nach der Erfindung noch vorgesehen, daß regelbare Öffnungen zum geregelten Außenlufteinlaß in den inneren Hohlraum des Bauwerkes sowie Regeleinrichtungen mit den dazugehörigen Stellorganen vorgesehen sind, mit denen der Außenlufteinlaß einerseits und die über die Wärmerückgewinnungsanlage abgesaugte Luftmenge andererseits geregelt werden. Hierdurch kann einerseits zuverlässig eine Veränderung des Temperaturniveaus des Gebäudeinneren bewirkt werden und es gelingt zusätzlich, eine solche Veränderung des Temperaturniveaus individuell für jeden im Gebäudeinneren abgetrennten Raum oder für Raumgruppen zu erreichen.

Weiterhin wird nach der Erfindung noch vorgeschlagen, daß Luftkollektoren vorgesehen sind, die mit dem Hohlraum verbunden oder verbindbar sind. Mit Hilfe der Luftkollektoren kann eine Temperatur- und Unterdruckbeeinflussung der Luft im Hohlraum auf einfache Art und Weise erreicht werden. Die gewonnene Sonnenenergie kann auch zur Schwimmbadbeheizung genutzt werden.

Eine andere Ausgestaltung der Erfindung sieht vor, daß im Heizungsvorlauf ein Wärmetauscher vorgesehen ist zur Versorgung des Brauchwassers oder des Wassers eines Schwimmbades mit Wärme. Auf diese Art und Weise wird ein ökonomisch günstiger Dauerbetrieb einer Wärmepumpe mit relativ geringer Leistung und günstiger Leistungszahl erreicht und ein evtl. Überschuß an Wärme über den Wärmetauscher sinnvoll abgeführt, so daß trotz des Überschusses an Wärme die Raumtemperatur im gewünschten Niveau gehalten werden kann. Selbstverständlich kann auch hier in an sich bekannter Weise das abfließende Brauchwasser wieder entwärmt werden, so daß auch über abfließendes Brauchwasser nicht Wärme verloren geht.

Eine andere Ausgestaltung der Erfindung sieht vor, daß zur Regelung der Luftmengen aus den Hohlräumen mindestens ein Stellorgan vorgesehen ist. Über diese Stellorgane kann Menge und Unterdruck in bestimmten Grenzen beeinflußt werden, wodurch auch Leistungszahl und Leistungsverhalten der Wärmepumpe beeinflußbar ist.

Es ist daher ergänzend nach der Erfindung noch vorgeschlagen, daß ein Stellorgan vorgesehen ist, zur Beeinflussung der Temperatur der entwärmten Luft. Mit diesem Stellorgan wird der Massedurchsatz der Wärmepumpe geregelt oder gesteuert.

Es ist auch nach der Erfindung noch vorgeschlagen, daß mindestens eine Umwälzpumpe für das Fluid in den Kupferrohren mit einem Raumthermostaten zur Regelung des Pumpendurchsatzes verbunden ist. Hierdurch gelingt es, den Temperaturgradienten des Fluids in den Kupferrohren über den Durchsatz der Umwälzpumpe, die durch die Raumthermostate gesteuert wird, zu verändern.

Weiterhin ist nach der Erfindung vorgeschlagen, daß die Ansaugluft der Wärmepumpen über Stellorgane, Heizeinrichtungen und Befeuchtungseinrichtungen, die im Bauwerk vorgesehen sind, bezüglich Temperatur, Feuchtigkeit und Menge beeinflußt werden kann. Hierdurch wird eine weitere Verbesserung der Regelmöglichkeiten erreicht und es gelingt, die jeweils arbeitenden Wärmpumpen immer mit optimaler Leistungszahl zu betreiben. Über die Heizeinrichtung und/oder die Befeuchtungseinrichtung kann zusätzlich Wärme in die Ansaugluft der Wärmepumpen eingebracht werden.

Schließlich ist nach der Erfindung noch vorgeschlagen, daß die Kupferrohre ein möglichst großes Verhältnis von Oberfläche zu Volumen aufweisen. Die Erfindung ermöglicht -ganz im Gegensatz zu den Notwendigkeiten des Stande der Technik- die Anwendung von sehr dünnen Rohren für die Wärmeverteilleitungen. Sehr kleine lichte Weiten der Rohre werden bevorzugt, wodurch die Rohre billiger werden und deren Verlegung einfacher wird. Hierdurch wird aber auch die Masse des durch die Rohre transportierten Mediums weniger, wodurch dieses schneller auf Wärmezu- oder -abfuhr reagiert, ein weiterer bedeutender Vorteil.

Es wird also nach der erfindungsgemäßen Lösung nicht mehr, wie im Stand der Technik bekannt, ein entsprechendes Gebäude von Luft umströmt, wobei die Luft von einer entsprechenden Strömungsmaschine in Zirkulation gehalten wird und wobei dieser Zirkulation Luft aus den Gebäudeinnenräumen zugefügt wird, sondern es ist vielmehr vorgesehen, diese Luftkanäle oder die das Gebäude umgebenden Hohlräume und den Gebäudeinnenteil durch eine entsprechende Pumpe einer Wärmerückgewinnungseinrichtung auf Unterdruck zu halten und den das Gebäude sozusagen in einer ersten Schicht umschließenden Hohlraum möglichst weitgehend mit einem zweiten Hohlraum zu umschließen, der über kleine Verbindungen mit dem inneren Hohlraum verbunden ist, wobei diese kleinen Verbindungen durchaus einfache Undichtigkeiten zwischen den die beiden Hohlräume voneinander trennenden Bauelementen sein können. Der äußere Hohlraum, der mit einer äußern Begrenzungsschicht gegen die umgebende Atmosphäre abgegrenzt ist, soll möglichst hoch liegende Öffnungen aufweisen, die es der Außenatmosphäre erlauben, in diesen äußeren Hohlraum einzudringen. In der Regel ist diese Außenatmosphäre kühler als der Bereich im Inneren des Gebäudes, so daß die Außenatmosphäre in diesen äußeren Hohlraum über die hochgelegenen Öffnungen als dichteres und damit schwereres Medium einsinkt. Gegenüber dem inneren Hohlraum hat die jetzt im äußeren Hohlraum befindliche Außenluft aufgrund ihrer höheren Dichte schon einen größeren Druck. Die Druckdifferenz wird durch die Absaugung durch die Wärmerückgewinnungseinrichtung vergrößert und es tritt somit nicht eine Umströmung der Gebäudehülle ein, sondern vielmehr sozusagen eine Radialbewegung der Außenluft von außen nach innen. Hierbei ist der Temperaturunterschied zwischen der Außenluft und dem äußeren Hohlraum nahezu Null. Das aber bedeutet, daß hier Transmissionswärme nicht verloren gehen kann. Soweit im angrenzenden weiter nach innen liegenden Hohlraum die Temperatur gegenüber dem äußeren Hohlraum größer ist und damit an den äußeren Hohlraum Transmissionswärme abgegeben wird, kann dort diese abgegebene Transmissionswärme nur die Luft in diesem äußeren Hohlraum etwas erwärmen, wobei dann jedoch diese erwärmte Luft nicht von den Luftströmungen der Außenatmosphäre zerstreut, sondern aufgrund der durch den Unterdruck erzwungenen Radialströmung nach innen wandert und dort die aufgenommene Transmissionswärme an der Wärmerückgewinnungseinrichtung wieder abgeben kann. Der Wärmeverlust wird hierdurch extrem verringert. Diese extreme Verringerung des Wärmeverlustes hat zur Folge, daß die Wärmeleistung der für die Beheizung des Gebäudeinneren vorgesehenen Einrichtungen sehr klein sein kann. Hierdurch wird es z.B. ermöglicht, Fußboden- und/oder Deckenheizungen zu verlegen, die mit Kufperrohren von sehr kleinem Querschnitt, beispielsweise einem lichten Durchmesser von 6 bis 8 mm, auskommen. Dies verbilligt und erleichtert die Installation eines solchen Heizsystems. Gleichzeitig kann die Vorlauftemperatur einer solchen Heizung etwa im Bereich der gewünschten Raumtemperatur liegen. Das Temperaturgefälle zwischen Raumtemperatur und Heizflächenoberflächentemperatur kann extrem gering gehalten werden. Hierdurch kann z.B. bei einer Fußbodenheizung auch bei sehr niedrigen Außentemperaturen eine Fußbodentemperatur in der Nähe der gewünschten Raumtemperatur beibehalten werden. Aufgrund des geringen Wärmeverlustes gelingt es außerdem die Wärmepumpe einer Wärmerückgewinnungseinrichtung klein auszulegen und außerdem mit günstiger Leistungszahl zu betreiben. Insgesamt wird im Gebäudeinneren sozusagen ein Gleichgewicht dadurch erreicht, daß das, was an Wärme nach außen verloren gehen will, wieder eingefangen und rückgeführt wird.

Mit dem erfindungsgemäßen Bauwerk ist darüber hinaus durchaus problemlos nicht nur der Verlust von Wärme aus dem Gebäude verhinderbar, sondern es kann beispielsweise auch der Verlust von Wärme aus der Umgebungsluft an das Gebäude verhindert werden, was z.B. von Bedeutung ist, wenn, wie z.B. im Sommer, die Außentemperatur der Umgebungsluft bedeutend höher als die für das Gebäudeinnere gewünschte Temperatur ist. In einem solchen Fall verliert die Umgebungsluft Transmissionswärme an das Gebäudeinnere. Da diese Wärme über die Hohlräume in das Gebäudeinnere fließen muß, diese Hohlräume aber in der beschriebenen Weise abgesaugt werden, so kann die so abgesaugte warme Luft entwärmt und die hierbei gewonnene Wärme nicht in das Gebäudeinnere sondern an die Außenluft abgegeben werden. Die entwärmte Luft kann hierbei direkt oder indirekt über Wärmetauscher zur Kühlung der Gebäudeinnenräume verwendet werden. Natürlich kann auf diese Art auch gewünschtenfalls die Innentemperatur des Gebäudes gesenkt werden. Dies kann beispielsweise dann der Fall sein, wenn zunächst Gebäudeinnentemperatur und Außentemperatur gleich sind und sich beispielsweise viele Menschen im Gebäude aufhalten, die Wärme abgeben und damit die Gebäudeinnentemperatur erhöhen. Die Kühlleistung kann noch dadurch verstärkt werden, daß die Warmluft aus den Räumen verstärkt abgesaugt, entwärmt und durch Frischluft ersetzt wird. Die hierbei gewonnene Wärme kann hierbei in nicht beheizte Bausubstanzmassen des Gebäudes, beispielsweise in den Kellerboden geführt werden und diesen erwärmen. Bei Bedarf kann dann diese Wärme wieder rückgewonnen werden und zu Heizzwecken dienen oder der Erwärmung von Brauchwasser dienen. Es ist zusätzlich möglich, das umgebende Erdreich des Gebäudes mit dementsprechenden Kanälen auszurüsten, und hier durch Erwärmung dieses Erdreiches überschüssige Wärme zu speichern und bei Bedarf wieder zu entnehmen.

Es ist auch möglich, die durch die Entwärmung gewonnene Wärme mindestens teilweise dem Körper z.B. in einem zu beheizenden Bereich wieder zuzuführen. Hierdurch wird ein geschlossener Kreislauf der Wärme erreicht. Bei nur teilweiser Zuführung wird dieser Kreislauf geöffnet zur Temperaturregulierung.

Es kann auch die im ersten Hohlraum befindliche Luft durch Bausubstanz nicht beheizter Räume und/oder das angrenzende Erdreich geführt werden. Hierdurch können diese, wie bereits erläutert, als Wärmespeicher verwendet werden. Sie können dann je nach Temperatursituation wieder Wärme abgeben oder als Wärmepuffer dienen.

Es kann vorteilhafterweise auch die abgesaugte Luft etwa bis auf die Temperatur der Außenluft entwärmt werden. Wäre die Temperatur der an die Außenluft abgegebenen Luft höher als diese, so ginge damit Wärme an die Außenluft verloren; wäre sie aber niedriger, so müßte die notwendige Wärmepumpe in einem ungünstigeren Bereich arbeiten.

Natürlich kann auch die bei der Entwärmung gewonnene Wärme der Umgebung zugeführt werden, während entwärmtes Fluid durch Bausubstanz zu kühlender Räume geführt wird. Hierdurch kann ein gewünschtes Tempereaturniveau eingefahren und erhalten werden.

Auch kann der Temperaturgradient des Fluids mit der zurückgewonnenen Wärme über Durchsatzveränderungen beeinflußt werden. Dies ist eine besonders einfache und wirksame Möglichkeit der Temperaturbeeinflussung oder Temperaturregelung.

Ein weiterer Vorteil ist darin zu sehen, daß die innere Energie des Fluids in der Wärmeverteilung der inneren Energie des Fluids, das bezüglich seiner Temperatur beeinflußt werden soll, z.B. Luft, angepaßt werden kann. Dies bedeutet, daß die Masse des Fluids, das zur Energieverteilung verwendet wird (also z.B. das Wasser des Heizungskreislaufs) so bemessen ist, daß deren Wärmeinhalt in der gleichen Größenordnung liegt, wie der Wärmeinhalt z.B. der Luft des zugehörigen Gebäudes. Hierdurch wird der Regelaufwand stark vereinfacht und Wärmeverlust vermieden. Gleichzeitig kann eine Nachregelung schneller und präziser erfolgen.

Die Erfindung soll nun anhand der beigefügten Zeichnungen näher erläutert werden.

Es zeigen:

Figur 1:    Prinzipieller Aufbau im Schnitt eines Körpers zur Durchführung des erfindungsgemäßen Verfahrens.

Figur 2:    Schnitt durch ein Wohnhaus

Figur 3:    Ausschnittvergrößerung mit Bezugszeichen Einzelheit B

Figur 4:    Ausschnittvergrößerung mit Bezugszeichen Einzelheit A

Figur 5:    Vergrößerung mit Bezugszeichen Einzelheit 27

Figur 6:    Blockschaltbild

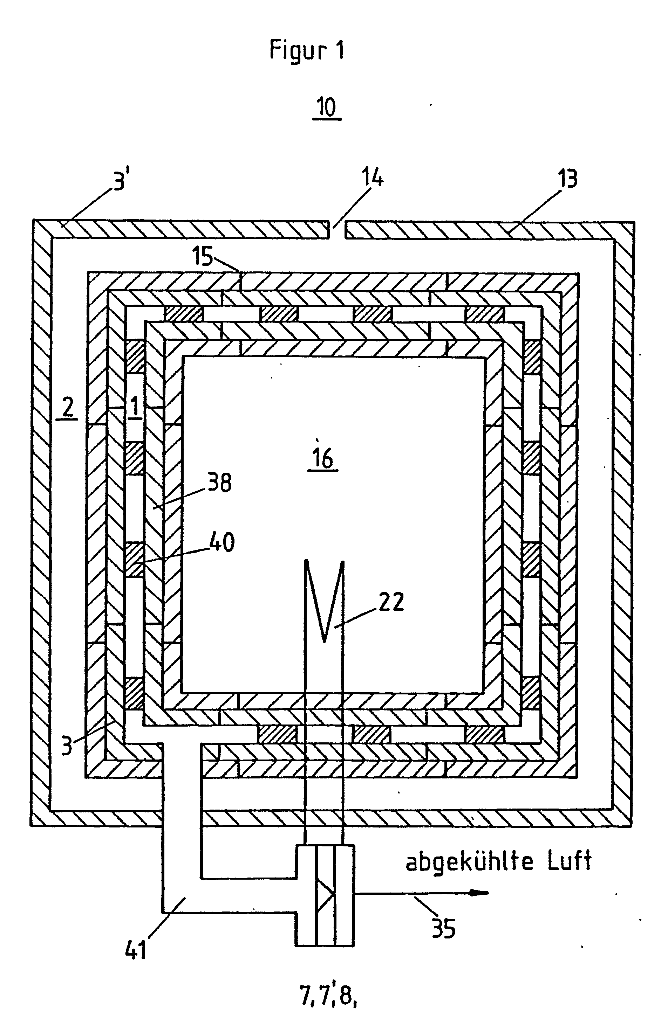

In Figur 1 ist ein bezüglich seines Temperaturniveaus zu beeinflussender Körper 13 (z.B. Behälter, Rohrleitung, Gebäude) im Querschnitt schematisch dargestellt. Ein auf seiner Temperatur zu haltender Bereich 16 ist von einer Dämmschicht 38 umgeben. Diese Dämmschicht 38 wird umfaßt von dem ersten Hohlraum 1, der wieder von einer Dämmschicht 3 umfaßt wird. Die Dämmschichten 3 und 38 sind aus Bauelementen 28 aufgebaut, die definierte Undichtigkeiten aufweisen und durch diese Undichtigkeiten einen den ersten Hohlraum 1 und die Dämmschicht 3 umschließenden zweiten Hohlraum mit dem ersten Hohlraum 1 verbinden. Der zweite Hohlraum 2 ist über eine äußere Grenzfläche 3', die beispielsweise von einer Ummantelung gebildet sein kann, gegenüber der Außenluft 10 abgegrenzt. Die Grenzfläche 3' weist an einer hochliegenden Stelle 14 eine Öffnung auf zur Verbindung der Außenluft 10 mit dem zweiten Hohlraum 2. Der zweite Hohlraum 2 ist über die erwähnten Undichtigkeiten 15 mit dem ersten Hohlraum 1 verbunden, der wiederum über den Kanal 41 mit einer Wärmerückgewinnungseinrichtung 7, 7', 8 verbunden ist. Die Wärmerückgewinnungseinrichtung ist über die Abluftleitung 35 in der Lage, entwärmte oder erwärmte Luft an die Umgebungsluft 10 abzugeben. Weiterhin weist die Wärmerückgewinnungseinrichtung einen im Bereich 16 liegenden Wärmetauscher 22 auf, um dem Bereich 16 Wärme zuzuführen oder zu entziehen.

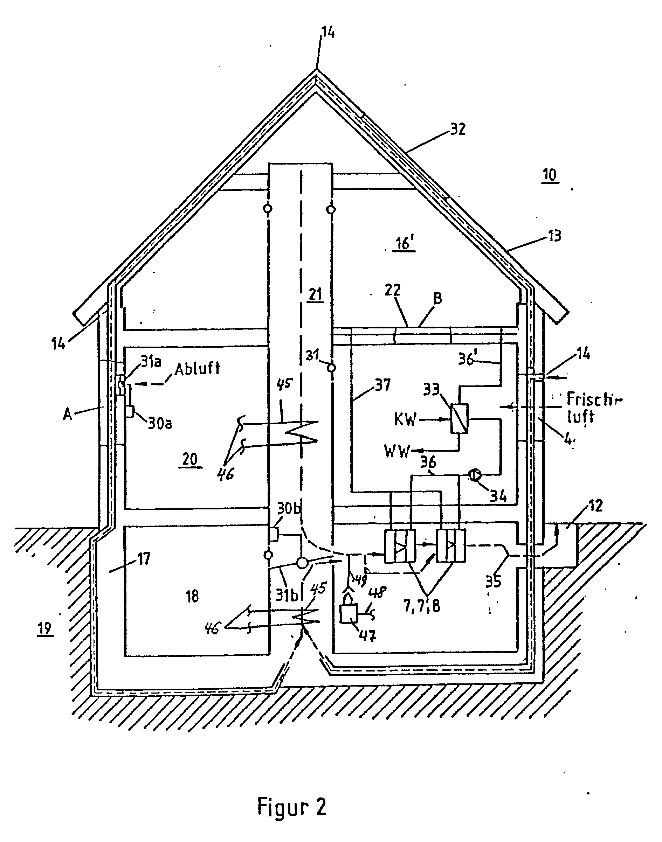

Das Gebäude 13 in Figur 2 ist in üblicher Weise abgedeckt durch ein nicht näher bezeichnetes Dach, welches in bekannter Weise auf Außenwänden ruht, die sich ihrerseits in üblicher Weise abstützen auf Kellerwände, die mit einem Fundament verbunden sind. Hierbei bildet im wesentlichen das Fundament eine Bausubstanz 17, die nicht beheizte Räume umfaßt. Diese Bausubstanz ist vom Erdreich 19 umgeben. Dieses Fundament, die Kellerwände und die darauf aufbauenden Außenwände und, soweit erforderlich, ebenfalls das Dach, weisen in Richtung ihrer Erstreckung verlaufende innere Kanäle auf, die einen, das Gebäude mindestens auf der wesentlichen Oberfläche umhüllenden, ersten Hohlraum 1 bilden. Dieser Hohlraum 1 kann im Bereich des Fundamentes durchaus auch oder zusätzlich durch das umgebende Erdreich 19 geführt werden.

Das Gebäude weist weiter einen als Zentralschacht ausgebildeten Sammelschacht 21 auf, sowie innere Hohlräume 20, die beispielsweise den Wohnbereich des Gebäudes bilden können. Im Sammelschacht 21 angeordnet ist eine Heizeinrichtung 45, deren Energieleitungen 46 mit einer nicht dargestellten Energiequelle verbunden sind. Die Bauart der Heizeinrichtung kann beliebig sein. Der Betrieb der Heizeinrichtung kann über eine nicht dargestellte Steuereinrichtung gesteuert werden. Mit der Heizeinrichtung kann nach Bedarf der Ansaugluft der Wärmepumpe Wärme zugeführt werden. Sowohl der erste Hohlraum 1 als auch die inneren Hohlräume 20 sind mit dem Sammelschacht 21 verbunden, wobei jedoch der erste Hohlraum 1 im Bereich des Fundamentes mit dem Sammelschacht 21 verbunden ist. Ein im Sammelschacht 21 angeordnetes Stellorgan 31b bewirkt eine Druck- und Durchsatzverteilung zwischen den aus den Innenräumen 20, bzw. den zu beheizenden Innenräumen 16' und dem ersten Hohlraum 1 abgesaugten Medium. Dieses Medium wird von einem Ventilator 8 einer Wärmepumpe 7' mit Wärmetauscher 7 abgesaugt. Auf der Saugseite der Wärmepumpe kann noch eine Anschlußleitung 49 vorgesehen sein die mit einer Luftbefeuchtungseinrichtung 47 verbunden ist und die angesaugte Luft bei Bedarf im gewünschten Umfang zu befeuchten. Durch diese Maßnahme kann ebenfalls in gewünschtem Umfang Wärme zugeführt werden. Hierzu ist die Befeuchtungseinrichtung mit einer Wasserzuleitung 48 verbunden. Auch der Betrieb der Befeuchtungseinrichtung kann über eine nicht dargestellte Steuereinrichtung gesteuert werden. Die genannte Einrichtung kann in einem Kellerraum, also einem nicht beheizten Raum 18, untergebracht sein. Die Einrichtung 7, 7', 8 ist über die Abluftleitung 35 mit der Außenluft 10 verbunden. Die im wesentlichen aus zwei Wärmetauschern 7, dem Kompressor 7', den Expansionsventil und dem Ventilator 8 bestehende Wärmerückgewinnungsanlage ist im Ausführungsbeispiel doppelt vorhanden. Die beiden Einrichtungen sind luftseitig hintereinandergeschaltet und weisen unterschiedliche, einander ergänzende Leistungen auf. Die über die Anlage gewonnene Wärme wird über die Leitung 36 und über die Pumpe 34 einem weiteren Wärmetauscher 33 zugeführt, der bei Bedarf Wärme für die Brauchwassererwärmung oder z. B. für die Erwärmung eines Schwimmbades abgeben kann. Über die sich anschließende Leitung 36' wird das von der Pumpe 34 geförderte Fluid, beispielsweise Wasser, durch die Kupferrohre 23 einer Fußboden- und Deckenheizung geleitet und von dort über die Leitung 37 wieder der Wärmerückgewinnungsanlage 7, 7', 8 zugeführt.

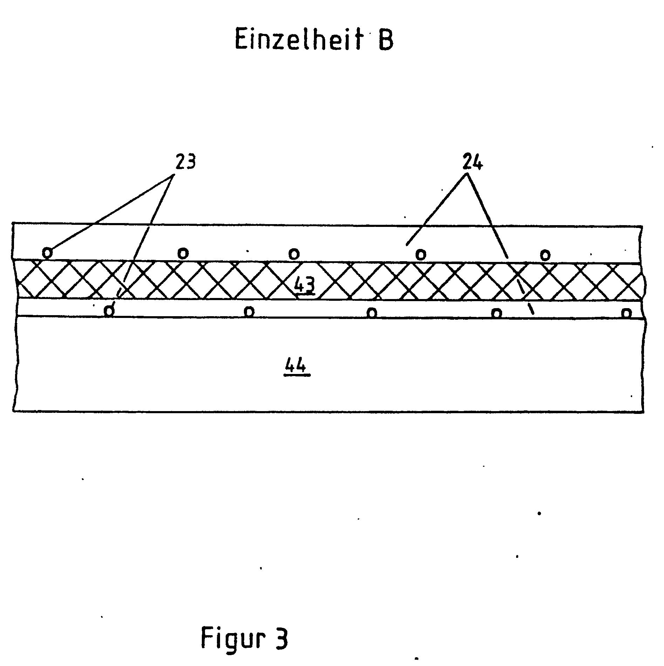

Wie Figur 3 zeigt, liegen die Kupferrohre der Fußboden- und Deckenheizung oberhalb und unterhalb einer Dämmschicht in einer gipsartigen Substanz 24, wie z. B. Fließestrich. Da zur Erhaltung einer gewünschten Temperatur in den inneren Hohlräumen 20 oder 16' nur sehr geringe Wärmemengen transportiert werden müssen und nur ein extrem geringes Temperaturgefälle zwischen Raumtemperatur und Temperatur des die Kupferrohre 23 durchströmenden Fluids erforderlich ist, können diese Kupferrohre 23 in ihren Querschnittsabmessungen außerordentlich gering gehalten werden. Es reicht beispielsweise ein Innendurchmesser der Rohre von 6 bis 8 mm. Hierdurch wird natürlich die Verlegung der Rohre und die Gestaltung der Rohrverteiler als Nebeneffekt sehr vereinfacht.

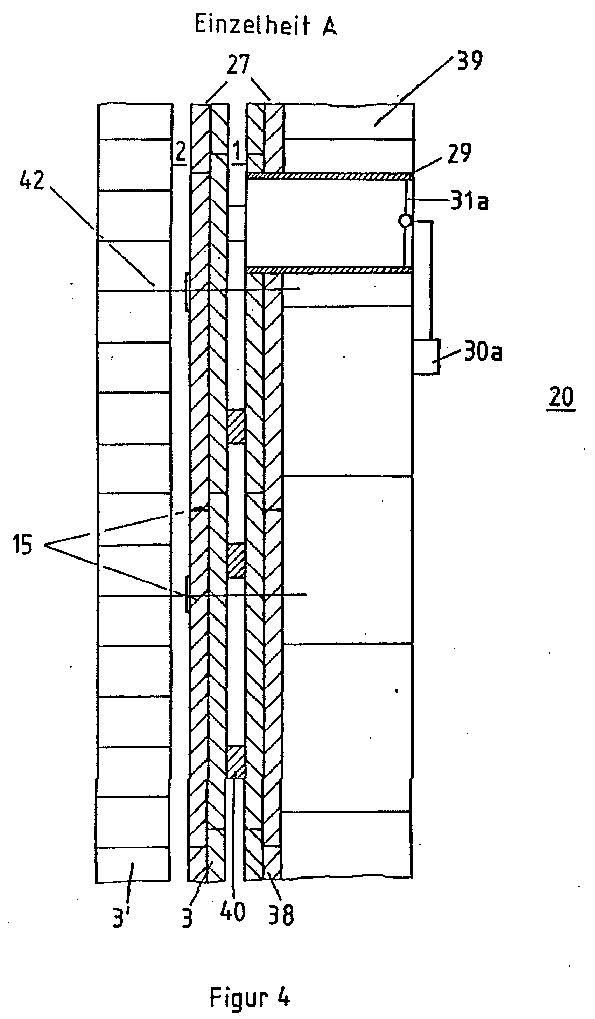

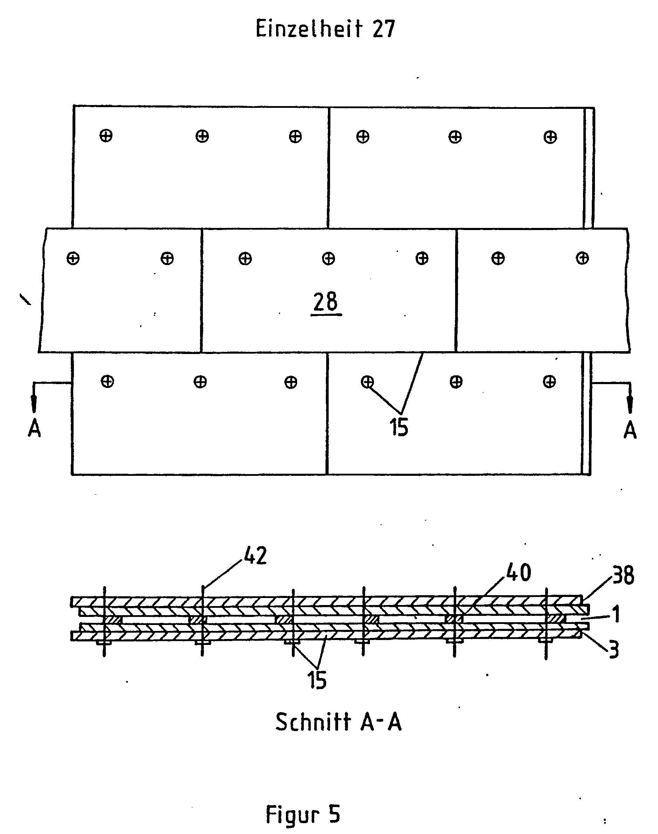

Der erste Hohlraum 1 (Figur 4) weist eine weiter außen liegende, als Zwischenwand ausgebildete Grenzfläche 3 auf, der sich ein weiter außen liegender zweiter Hohlraum 2 anschließt. Wesentliche Teile der das Erdreich 19 überragenden Bausubstanz des Gebäudes nach Figur 1 sind umfaßt von diesem zweiten Hohlraum 2, der auch in Form einer Vielzahl von Kanälen ausgebildet sein kann. Solche Hohlkanäle 27 (siehe Figur 5) können von Bauelementen 28 aufgebaut sein, die über definierte Undichtigkeiten 15 mit dem ersten Hohlraum 1 verbunden sind. Eine Ausschnittvergrößerung des Baukörpers 26 zeigt Figur 4. Dort ist von außen nach innen gesehen zunächst das die äußere Grenzfläche 3' bildende Mauerwerk dargestellt, das den zweiten Hohlraum 2 nach außen gegenüber der Außenluft 10 begrenzt. Dem zweiten Hohlraum 2 nach innen folgt die als doppellagige Dämmschicht ausgebildete Grenzfläche 3, die den ersten Hohlraum 1 gegenüber dem zweiten Hohlraum 2 trennt. Weiter nach innen schließt sich dem ersten Hohlraum 1 eine zweite doppellagige Dämmschicht 38 an, die zusammen mit der Dämmschicht 3 auf dem Mauerwerk 39 des Gebäudes aufgebracht ist. Distanzstücke 40 bestimmen hierbei die Größe des ersten Hohlraums 1 und sorgen für die entsprechende Stabilität der Hohlwärmedämmung, die nach Nut- und Feder-Art aus normalen Hartschwaumplatten in einer Vorrichtung zusammengesetzt wird, wobei die versetzt angeordneten Hartschwaumplatten mit Widerhaken und Klebestoffen zusammengehalten werden.

Im Mauerwerk 39 und durchgehend durch die Dämmschicht 38 ist eine regelbare Öffnung 29 (Figur 4) vorgesehen, in der ein Stellorgan 31a angeordnet ist, das über eine Regeleinrichtung 30 betätigt wird. Über diese regelbare Öffnung 29 kann der erste Hohlraum 1 mit einem inneren Hohlraum 20 verbunden werden. Der sich aufgrund der jeweiligen Unterdruckdifferenz ergebende Massestrom kann über das von der Regeleinrichtung 30a betätigte Stellorgan 31a beeinflußt werden. Die genannte Regeleinrichtung sorgt im Betrieb dafür, daß über die Regelung des Massedurchsatzes ein gewünschter oder notwendiger Unterdruck im ersten Hohlraum 1 und bei Bedarf auch in den Innenräumen 16' oder 20 erzeugt wird.

Der zweite, äußere Hohlraum 2, kann den ersten Hohlraum 1, falls notwendig auch über die Dachfläche, wie dies im Ausführungsbeispiel nach Figur 1 angedeutet ist, umfassen. Es ist notwendig, daß der zweite, äußere Hohlraum 2 an möglichst hoch liegenden Stellen 14 eine Verbindung zur Außenluft 10 aufweist. An diesen Stellen kann die Außenluft 10 in diesen zweiten Hohlraum 2 eindringen. Dadurch, daß einerseits der erste Hohlraum 1 unter Unterdruck steht und andererseits über die definierten Undichtigkeiten 15 mit dem zweiten Hohlraum 2 verbunden ist, wandert die über die hochliegenden Stellen 14 in den zweiten Hohlraum 2 eingedrungene Außenluft durch die definierten Undichtigkeiten 15 hindurch in den ersten Hohraum 1 und wird von dort abgesaugt in die Wärmerückgewinnungsanlage. Transmissionswärme, die somit von den Innenräumen 16' und/oder 20 in den ersten Hohlraum 1 übergegangen ist, wird daher zunächst über die Absaugung dieses ersten Hohlraumes 1 von der Wärmerückgewinnungsanlage wieder rückgewonnen. Da jedoch im ersten Hohlraum 1 durch den Übergang der Transmissionswärme die Temperatur dort größer sein kann, als die Temperatur der Außenluft, die sich im zweiten Hohlraum 2 befindet, kann auch dort wegen des bestehenden Temperaturgefälles noch Transmissionswärme übergehen. Die hier übergehende Transmissionswärme ist jedoch bereits bedeutend geringer - wegen des geringeren Temperaturgefälles - als bei herkömmlicher Bauweise mit dem entsprechenden höheren Temperaturgefälle. Aber auch die Transmissionswärme, die noch den zweiten Hohlraum 2 erreicht, wird, jedenfalls überwiegend, zurückgewonnen, dadurch, daß ja nur die grenznahe Luftschicht an der Grenzfläche 3 im zweiten Hohlraum 2 durch die Transmissionswärme erwärmt, aber durch die definierten Undichtigkeiten 15 in den ersten Hohlraum 1 rückgesaugt wird. Nach herkömmlicher Technik würde diese grenznahe erwärmte Luftschicht von der Außenatmosphäre verweht und die Wärme wäre verloren. Dies ist nach der Erfindung nicht mehr möglich.

Für den umgekehrten Fall, nämlich für den Fall, daß die Außenlufttemperatur höher ist als die gewünschte Temperatur in den Innenräumen 16' oder 20, steht im zweiten Hohlraum 2 wärmere Luft an, als in den genannten Innenräumen. Hierdurch gelangt Transmissionswärme einerseits über die definierten Undichtigkeiten 15 und andererseits direkt als Strahlungswärme über die Zwischenwand 3 in den ersten Hohlraum 1, der ja, wie beschrieben, abgesaugt wird. Durch diese Absaugung kann im Hohlraum 1 die Temperatur bis auf die Temperatur der Innenräume abgesenkt werden, so daß ein weiterer Wärmeübergang nach innen wegen des fehlenden Temperaturgefälles nicht mehr möglich ist. Die hierdurch in der Wärmerückgewinnungseinrichtung rückgewonnene Wärme wird wieder an die Außenluft 10 abgegeben. Es wird daher die Wärme in das Medium zurückgeführt, das die Wärme verloren hat. Diese geschieht auch so, wenn Transmissionswärme, die aus den Innenräumen 16' bzw. 20 nach außen in die Hohlräume 1 und 2 gelangt ist, rückgewonnen wird. Die rückgewonnene Wärme wird dann, soweit hierzu Bedarf besteht, wieder den Räumen 16' oder 20 zugeführt. Soweit dort Bedarf nicht besteht, kann die rückgewonnene Wärme auch benutzt werden zur Erwärmung von Brauchwasser oder beispielsweise zur Erwärmung des Wassers eines Schwimmbades. Die entwärmte Luft geht als Abluft 12 über die Abluftleitung 35 beispielsweise zurück in die Außenluft 10.

Da auf die beschriebene und erfindungsgemäße Art und Weise ein Wärmeverlust vollständig vermieden wird, kann die Leistung der Wärmerückgewinnungseinrichtung ungewöhnlich niedrig gehalten werden. Da auch der Wärmetauscher 22 des Gebäudes bzw. die entsprechende Fußboden- und Deckenheizung nur geringe Wärmemengen transportieren muß, können dort die Rohrleitungen sehr klein gehalten werden. Wegen des geringen Wärmetransportes kann diese Einrichtung auch mit einem sehr niedrigen Temperaturgefälle zur gewünschten Raumtemperatur hin arbeiten, weil ja nur geringe Wärmemengen transportiert werden müssen. Diese niedrige Temperatur der Fußboden- und Deckenheizung erlaubt eine entsprechend kleine Auslegung der notwendigen Wärmepumpe und erlaubt gleichzeitig, daß diese mit einer günstigen Leistungszahl betrieben werden kann.

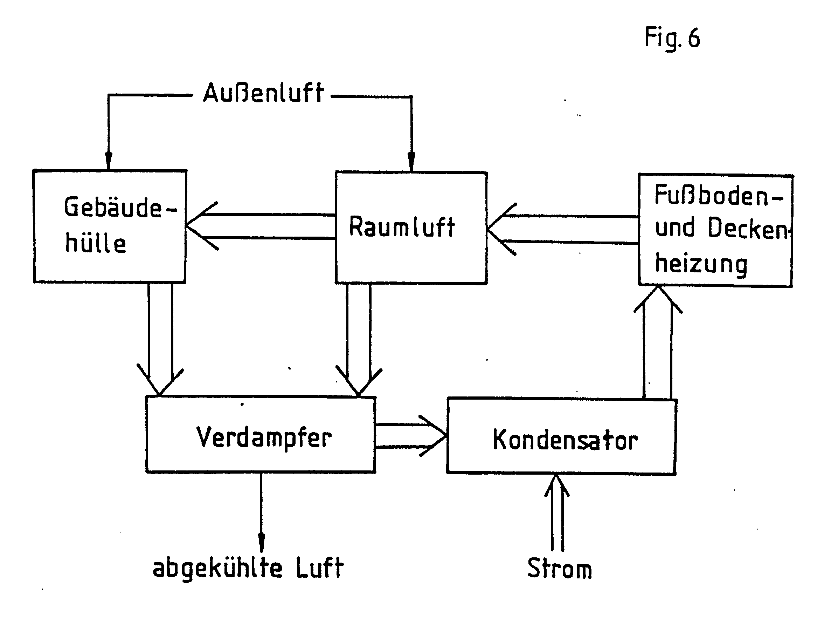

Figur 6 schließlich zeigt ein Blockschaltbild des erfindungsgemäßen Verfahrens. Dort ist schematisch der Energiefluß noch einmal dargestellt.

Liste der verwendeten Bezugzeichen

| 1 | erster Hohlraum |
|---|---|
| 2 | zweiter Hohlraum |
| 3 | Grenzfläche (Zwischenwand) |
| 3' | Grenzfläche außen |
| 4 | Fenster |
| 5 | unbenutzt |
| 6 | unbenutzt |
| 6' | unbenutzt |
| 7 | Wärmetauscher |
| 7' | Wärmepumpe |
| 8 | Ventilator (Saugeinrichtung) |
| 9 | unbenutzt |
| 9' | unbenutzt |
| 10 | Außenluft |
| 11 | unbenutzt |
| 12 | Abluft |
| 13 | Gebäude, Körper, Bauwerk |
| 14 | hochliegende Stellen |
| 15 | definierte Undichtigkeiten |
| 16 | zu beheizender Bereich |
| 16' | zu beheizender Bereich |
| 17 | Bausubstanz nicht beheizter Räume |
| 18 | nicht beheizte Räume |

| 19 | umgebendes Erdreich |
|---|---|
| 20 | innerer Hohlraum |
| 21 | Sammelschacht |
| 22 | Wärmetauscher des Gebäudes |
| 23 | Kupferrohre |
| 24 | gipsartige Substanz |
| 25 | unbenutzt |
| 26 | Baukörper |
| 27 | Hohlkanäle |
| 28 | Bauelemente |
| 29 | regelbare Öffnungen |
| 30 | Regeleinrichtung |
| 30a | Regeleinrichtung |
| 30b | Regeleinrichtung |
| 31 | Stellorgan |
| 31a | Stellorgan |
| 31b | Stellorgan |
| 32 | Luftkollektor |
| 33 | Wärmetauscher |
| 34 | Pumpe |
| 35 | Abluftleitung |
| 36 | Leitung |
| 36' | Leitung |
| 37 | Leitung |
| 38 | Dämmschicht |
| 39 | Mauerwerk |
| 40 | Distanzstücke |
| 41 | Kanal |
| 42 | Befestigungselement |
| 43 | Dämmung |
| 44 | massereiche Bausubstanz |
| 45 | Heizeinrichtung |
| 46 | Energieleitung |
| 47 | Befeuchtungseinrichtung |
| 48 | Wasserzuleitung |
| 49 | Anschlußleitung für Wärmepumpeneingang |

**Patentansprüche**

1. Bauwerk mit mindestens einem inneren Hohlraum und mindestens einem inneren Sammelschacht, der einerseits mit der Ansaugseite einer Wärmerückgewinnungsanlage und andererseits mit inneren Hohlräumen des Bauwerks verbunden ist, wobei das Bauwerk in mindestens dem überwiegenden Teil seines Außenbereiches von einem ersten Hohlraum mit einer äußeren Begrenzungsfläche umgeben ist, der mit dem Sammelschacht verbunden ist und wobei das Bauwerk Wärmetauscher aufweist, die mit dem Wärmetauscher der Wärmerückgewinnungsanlage verbunden sind, dadurch gekennzeichnet, daß die äußere Begrenzungsfläche (3) mindestens überwiegend in dem Bereich, in dem das Bauwerk (13) in die Außenluft (10) hineinragt, von einem zweiten Hohlraum (2) umgeben ist, das seinerseits über eine äußere Begrenzungsfläche (3') zur Außenluft (10) bildende Bauwerk gegen diese Außenluft (10) abgegrenzt ist, wobei der zweite Hohlraum (2) mit dem ersten Hohlraum (1) über definierte Undichtigkeiten (15) verbunden ist, der erste Hohlraum (1) und die inneren Hohlräume (16, 20) mit dem Sammelschacht (21) verbunden sind und der zweite Hohlraum (2) möglichst hoch gelegene Öffnungen (14) aufweist.

2. Bauwerk nach Anspruch 1, dadurch gekennzeichnet, daß die Wärmetauscher (7) in Gips oder gipsartiger Substanz (24) im Bauwerk (13) verlegte Kupferrohre (23) aufweisen.

3. Bauwerk nach mindestens einem der Ansprüche 1 und 2, dadurch gekennzeichnet, daß die Wärmerückgewinnungsanlage (7, 7', 8) mindestens eine Wärmepumpe (7') enthält.

4. Bauwerk mindestens nach Anspruch 3, dadurch gekennzeichnet, daß die Wärmerückgewinnungsanlage (7, 7', 8) mehrere Wärmepumpen (7') enthält, die luftseitig hintereinander geschaltet und entsprechend dieser Schaltung in ihrer Leistung abgestuft sind.

5. Bauwerk nach mindestens einem der Ansprüche 1 bis 4, dadurch gekennzeichnet, daß die die äußere Begrenzung des Bauwerkes bildenden Baukörper (26) als Verkleidung auf die Bausubstanz des Bauwerks (13) aufgesetzt sind.

6. Bauwerk nach mindestens einem der Ansprüche 1 bis 5, dadurch gekennzeichnet, daß der erste und zweite Hohlraum (1,2) mindestens teilweise als Mehrzahl von Hohlkanälen (27) ausgebildet ist.

7. Bauwerk nach mindestens einem der Ansprüche 1 bis 6, dadurch gekennzeichnet, daß die die Hohlräume (1,2,27) enthaltenden Baukörper (26) als zusammensetzbare Bauelemente (28) ausgebildet sind und in zusammengesetzter Form eine Wärmedämmschale bilden.

8. Bauwerk nach mindestens einem der Ansprüche 1 bis 7, dadurch gekennzeichnet daß der Sammelschacht (21) zumindest teilweise von den im Bauwerk (13) vorgesehenen Korridoren und damit verbundenen Treppenschächten gebildet wird.

9. Bauwerk nach mindestens einem der Ansprüche 1 bis 8, dadurch gekennzeichnet, daß vorhandene Kamine mit Durchsatzregeleinrichtungen ausgerüstet werden und zum Ansaugen und Vorwärmen von Außenluft mit der Wärmerückgewinnungsanlage verbunden werden.

10. Bauwerk nach mindestens einem der Ansprüche 1 bis 9, dadurch gekennzeichnet, daß regelbare Öffnungen (29) zum geregelten Außenlufteinlaß in den inneren Hohlraum (20) des Bauwerks (13) sowie Regeleinrichtungen (30, 30a) mit den dazugehörigen Stellorganen (31, 31a) vorgesehen sind, mit denen der Außenlufteinlaß einerseits und die über die Wärmerückgewinnungsanlage (7, 7', 8) abgesaugte Luftmenge andererseits geregelt werden.

11. Bauwerk nach mindestens einem der Ansprüchje 1 bis 10, dadurch gekennzeichnet, daß mindestens ein Luftkollektor (32) vorgesehen ist, der mit dem Hohlraum (1) verbunden oder verbindbar ist.

12. Bauwerk nach mindestens einem der Ansprüche 1 bis 11, dadurch gekennzeichnet, daß im Heizungsvorlauf ein Wärmetauscher (33) vorgesehen ist, zur Versorgung des Brauchwassers oder des Wassers eines Schwimmbades mit Wärme.

13. Bauwerk nach mindestens einem der Ansprüche 1 bis 12, dadurch gekennzeichnet, daß zur Regelung der Luftmengen aus den Hohlräumen (1,20) mindestens ein Stellorgan (31b) vorgesehen ist.

14. Bauwerk nach mindestens einem der Ansprüche 1 bis 13, dadurch gekennzeichnet, daß ein Stellorgan (31 b) vorgesehen ist, zur Beeinflussung der Temperatuir der erwärmten Luft.

15. Bauwerk nach mindestens einem der Ansprüche 1 bis 14, dadurch gekennzeichnet, daß mindestens eine Umwälzpumpe (34) für das Fluid in den Kupferrohren mit einem Raumthermostaten verbunden ist, der bei Abweichung vom Raumluft-Sollwert durch Zuschalten der Umwälzpumpe den Fluiddurchsatz erhöht.

16. Bauwerk mindestens nach Anspruch 4, dadurch gekennzeichnet, daß die Ansaugluft der Wärmepumpen (7') über Stellorgane (31'), Heizeinrichtungen (45) und Befeuchtungseinrichtungen (47), die im Bauwerk (13) vorgesehen sind, bezüglich Temperatur, Feuchtigkeit und Menge beeinflußt werden kann.

17. Bauwerk nach mindestens einem der Ansprüche 1 bis 16, dadurch gekennzeichnet, daß die Kupferrohre (20) ein möglichst großes Verhältnis von Oberfläche zu Volumen aufweisen.

**Claims**

1. Construction having at least one inner cavity and at least one inner collecting shaft, which is connected on the one hand to the intake side of a heat recovery plant and on the other hand to inner cavities of the construction, wherein at least the predominant part of the outer region of the construction is surrounded by a first cavity having an outer limiting face, which cavity is connected to the collecting shaft and wherein the construction has heat exchangers, which are connected to the heat exchanger of the heat recovery plant, characterised in that the outer limiting face (3) is surrounded, at least predominantly in the region in which the construction (13) projects into the outside air (10), by a second cavity (2), which in turn is separated from the outside air (10) by construction forming an outer limiting face (3') with respect to the outside air (10), wherein the second cavity (2) is connected to the first cavity (1) by way of defined leakage points (15), the first cavity (1) and the inner cavities (16, 20) are connected to the collecting shaft (21), and the second cavity (2) has openings (14) which are located as high as possible.

2. Construction as in claim 1, characterised in that the heat exchangers (7) have copper pipes (23) which are laid in the construction (13) in plaster or a plaster-like substance (24).

3. Construction as in at least one of claims 1 and 2, characterised in that the heat recovery plant (7, 7', 8) contains at least one heat pump (7').

4. Construction as in at least claim 3, characterised in that the heat recovery plant (7, 7', 8) contains a plurality of heat pumps (7'), which are connected in series on the air side and the efficiency of which is graded in accordance with this connection.

5. Construction as in at least one of claims 1 to 4, characterised in that the structural members (26) forming the outer limit of the construction are set on the structural substance of the construction (13) as cladding.

6. Construction as in at least one of claims 1 to 5, characterised in that the first and second cavities (1, 2) are at least partly in the form of a plurality of hollow passages (27).

7. Construction as in at least one of claims 1 to 6, characterised in that structural, members (26) containing the cavities (1, 2, 27) are in the form of structural elements (28) which can be put together and which, when put together, form a heat-insulating shell.

8. Construction as in at least one of claims 1 to 7, characterised in that the collecting shaft (21) is formed at least partly by the corridors provided in the construction (13) and stepped shafts connected thereto.

9. Construction as in at least one of claims 1 to 8, characterised in that existing chimneys are provided with throughput control devices and are connected to the heat recovery plant for the intake and pre-heating of the outside air.

10. Construction as in at least one of claims 1 to 9, characterised in that controllable openings (29) are provided for the controlled intake of outside air into the inner cavity (20) of the construction (13), as are control devices (30, 30a) with associated adjusting members (31, 31a), using which the intake of outside air on the one hand and the quantity of air drawn off by way of the heat recovery plant (7, 7', 8) on the other hand are controlled.

11. Construction as in at least one of claims 1 to 10, characterised in that at least one air collector (32) is provided, which is connected or connectable to the cavity (1).

12. Construction as in at least one of claims 1 to 11, characterised in that a heat exchanger (33) is provided in the pre-heating circuit for providing the water for domestic use or the water of a swimming pool with heat.

13. Construction as in at least one of claims 1 to 12, characterised in that at least one adjusting member (31b) is provided for controlling the quantities of air from the cavities (1, 20).

14. Construction as in at least one of claims 1 to 13, characterised in that an adjusting member (31b) is provided for influencing the temperature of the heated air.

15. Construction as in at least one of claims 1 to 14, characterised in that at least one circulation pump (34) for the fluid in the copper pipes is connected to a room thermostat, which in the event of deviation from the desired ambient air value increases fluid throughput by switching on the pump.

16. Construction as in at least claim 4, characterised in that the temperature, humidity and quantity of the intake air of the heat pumps (7') can be influenced by way of adjusting members (31b), heating devices (45) and humidifying devices (47), which are provided in the construction (13).

17. Construction as in at least one of claims 1 to 16, characterised in that the copper pipes (20) have a maximum possible surface to volume ratio.

**Revendications**

1. Construction comportant au moins un vide intérieur et au moins un puits collecteur intérieur relié, d'une part, au côté aspiration d'une installation de récupération de chaleur et, d'autre part, aux vides intérieurs de la construction, étant précisé que la construction est, sur au moins la portion principale de sa partie extérieure, entourée par un premier vide dont la surface limite extérieure est reliée au puits collecteur et que la construction présente des échangeurs de chaleur qui sont reliés à l'échangeur de chaleur de l'installation de récupération de chaleur, caratérisée par le fait que la surface limite extérieure (3) est, au moins principalement dans la partie par laquelle la construction (13) pénètre dans l'air extérieur (10), entourée par un second vide (2) qui, de son côté, est limité, en direction de l'air extérieur (10), par l'intermédiaire d'un ouvrage formant une surface extérieure (3') de limitation par rapport audit air extérieur (10), étant précisé que le second vide (2) communique avec le premier vide (1) au travers de défauts d'étanchéité définis (15), que le premier vide (1) et les vides intérieurs (16, 20) sont reliés au puits collecteur (21) et que le second vide (2) présente des ouvertures (14) situées le plus haut possible.

2. Construction selon la revendication 1, caractérisée par le fait que les échangeurs de chaleur (7) présentent des tubes de cuivre (23) posés dans la construction (13), dans du plâtre ou dans une substance du type plâtre (24).

3. Construction selon au moins l'une des revendications 1 et 2, caractérisée par le fait que l'installation de récupération de chaleur (7, 7', 8) contient au moins une pompe à chaleur (7').

4. Construction selon au moins la revendication 3, caractérisée par le fait que l'installation de récupération de chaleur (7, 7' 8) contient plusieurs pompes à chaleur (7') qui, côté air, sont montées en série et dont les puissances sont étagées conformément à ce montage.

5. Construction selon au moins l'une des revendications 1 à 4, caractérisée par le fait que les composants (26) formant la limite extérieure de la construction sont rapportés, en tant que parements, sur le matériau de la construction (13).

6. Construction selon au moins l'une des revendications 1 à 5, caractérisée par le fait que le premier et le second vides (1, 2) se présentent au moins partiellement sous la forme d'une multiplicité de canaux creux (27).

7. Construction selon au moins l'une des revendications 1 à 6, caractérisée par le fait que les composants (26) contenant les vides (1, 2, 27) sont conçus sous forme d'éléments de construction (28) pouvant s'assembler et, sous forme assemblée, forment une coque d'isolation thermique.

8. Construction selon au moins l'une des revendications 1 à 7, caractérisée par le fait que le puits collecteur (21) est au moins partiellement formé par les couloirs prévus dans la construction (13) et par les cages d'escalier qui leur sont reliées.

9. Construction selon au moins l'une des revendications 1 à 8, caractérisée par le fait que des cheminées existantes sont équipées de dispositifs de régulation de débit et que, pour aspirer et préchauffer l'air extérieur, elles sont reliées à l'installation de récupération de chaleur.

10. Construction selon au moins l'une des revendications 1 à 9, caractérisée par le fait que, pour l'introduction régulée de l'air extérieur dans le vide intérieur (20) de la construction (13), sont prévues des ouvertures réglables (29) ainsi que des dispositifs de régulation (30, 30a), avec les organes de réglage correspondants (31, 31a), avec lesquels sont réglés d'une part l'introduction d'air extérieur et d'autre part le débit d'air aspiré à travers l'installation de récupération de chaleur (7, 7' 8).

11. Construction selon au moins l'une des revendications 1 à 10, caractérisée par le fait qu'il est prévu au moins un collecteur d'air (32) qui est relié, ou que l'on peut relier, au vide (1).

12. Construction selon au moins l'une des revendications 1 à 11, caractérisée par le fait que dans la conduite de chauffage amont, est prévu un échangeur de chaleur (33) pour la fourniture de l'eau de consommation ou de l'eau d'une piscine.

13. Construction selon au moins l'une des revendications 1 à 12, caractérisée par le fait que pour la régulation du débit d'air sortant des vides (1,20), il est prévu au moins un organe de réglage (31b).

14. Construction selon au moins l'une des revendications 1 à l3, caractérisée par le fait qu'un organe de réglage (31b) est prévu pour agir sur la température de l'air réchauffé.

15. Construction selon au moins l'une des revendications 1 à 14, caractérisée par le fait qu'au moins une pompe de recyclage (34) pour le fluide qui se trouve dans les tubes de cuivre est reliée à un thermostat d'ambiance qui, en cas d'écart par rapport à la valeur de consigne de l'air ambiant, accroît le débit de fluide par mise en service de la pompe de recyclage.

16. Conctruction selon au moins la revendication 4, caractérisée par le fait que l'air d'admission des pompes à chaleur (7') peut être influencé, en ce qui concerne sa température, son humidité et son débit, par l'intermédiaire d'organes de réglage (31b), de dispositifs de chauffage (45) et de dispositifs d'humidification (47) qui sont prévus dans la construction (13).

17. Construction selon au moins l'une des revendications 1 à 16, caractérisée par la fait que les tubes de cuivre (20) présentent un rapport le plus grand possible entre leur surface et leur volume.

# Figur 1

<u>10</u>

abgekühlte Luft

7, 7', 8,

Figur 2

# Einzelheit B

Figur 3

Einzelheit A

Figur 4

## Einzelheit 27

## Schnitt A-A

## Figur 5

Fig. 6

Außenluft

| Gebäude-hülle | Raumluft | Fußboden- und Decken-heizung |

Verdampfer → Kondensator

abgekühlte Luft

Strom

EP 0 236 704 B1